# EUROPEAN PATENT APPLICATION

(11) **EP 4 682 073 A1**
(43) Date of publication of application: **21.01.2026**
(21) Application number: 24770978.5
(22) Date of filing: 14.03.2024
(51) Int. Cl.: B65D 30/02, A61J 1/05, A61J 1/10, B65D 33/38

(54) **PACKAGING BAG**

(30) Priority: 16.03.2023 JP 2023042338
(71) Applicant: ZACROS Corporation, Tokyo 112-0002 (JP)
(72) Inventor: SUZUKI, Jun, Tokyo 112-0002 (JP); HAYASHI, Yuki, Tokyo 112-0002 (JP); NAKAMURA, Masaya, Tokyo 112-0002 (JP); OZAKI, Shinya, Tokyo 112-0002 (JP); SAWAGUCHI, Kouta, Tokyo 112-0002 (JP)
(74) Representative: Godemeyer Blum Lenze Patentanwälte Partnerschaft mbB - werkpatent
(86) International application number: PCT/JP2024/010032
(87) International publication number: WO 2024/190875

(57) **Abstract**

A packaging bag of the present invention includes a bag body provided with: a bonded part that is obtained by layering laminates, each of which includes a sealant layer, an oxygen barrier layer, and a water vapor barrier layer in that order, such that the sealant layer sides thereof face each other, and fusing the outer peripheral edges of both laminates together; and a storage chamber that is defined by the laminates and the bonded part, and that can be filled with contents, in which the water vapor barrier layer contains a fluorine-based resin.

## Description

### TECHNICAL FIELD

The present invention relates to a packaging bag.

### BACKGROUND ART

In various fields such as the medical, food, and cosmetics fields, a bag-like package formed by layering laminates obtained by laminating resin films of a plurality of types and bonding the outer peripheries thereof by means of heat sealing or the like is used as a package to be filled with contents such as a pharmaceutical product, a food product or a cosmetic product.

As such a package, for example, there is disclosed (Patent Literature 1, for example) a packaging bag formed using a gas barrier film which has a gas barrier layer in which a water vapor barrier resin layer having a water vapor permeability of 20 g/(m²·d) or less is disposed on both surfaces of an oxygen barrier resin layer formed of a high hydrogen bonding resin containing an inorganic layered compound.

### CITATION LIST

### Patent Literature

Patent Literature 1: Japanese Unexamined Patent Application, First Publication No. 2015-036215

### SUMMARY OF INVENTION

### TECHNICAL PROBLEM

However, in the case of the packaging bag of Patent Literature 1, when water vapor is absorbed by the water vapor barrier resin layer, the barrier properties may deteriorate. When water vapor passes through the water vapor barrier resin layer and reaches the oxygen barrier resin layer, there is a problem that the oxygen barrier resin layer absorbs water vapor, thereby reducing the oxygen barrier properties.

It is important that the packaging bag can maintain the oxygen barrier properties by keeping the oxygen permeability low so that a state in which the contents do not deteriorate due to oxidation can be maintained until the contents are used, and can maintain the water vapor barrier properties by keeping the water vapor transmission properties low so that the concentration of the contents does not change.

An objective of one aspect of the present invention is to provide a packaging bag capable of maintaining oxygen barrier properties and water vapor barrier properties.

### SOLUTION TO PROBLEM

One aspect of the present invention provides a packaging bag, including a bag body provided with: a bonded part that is obtained by layering laminates, each of which includes a sealant layer, an oxygen barrier layer, and a water vapor barrier layer in that order, such that the sealant layer sides thereof face each other, and fusing the outer peripheral edges of both laminates together; and a storage chamber that is defined by the laminates and the bonded part, and that can be filled with contents, in which the water vapor barrier layer contains a fluorine-based resin.

### ADVANTAGEOUS EFFECTS OF INVENTION

According to one aspect of the present invention, there is provided a packaging bag capable of maintaining oxygen barrier properties and water vapor barrier properties.

### BRIEF DESCRIPTION OF DRAWINGS

Fig. 1 is a plan view of a packaging bag according to a first embodiment of the present invention.
Fig. 2 is a cross-sectional view taken along line I-I in Fig. 1.
Fig. 3 is a cross-sectional view of a packaging bag according to a second embodiment of the present invention.

### DESCRIPTION OF EMBODIMENTS

Hereinafter, embodiments of the present invention will be described in detail. Note that, in order to facilitate understanding of the description, the same components are denoted by the same reference numerals in the drawings, and redundant descriptions will be omitted. In addition, the scale of each member in the drawings may be different from the actual scale. In the present specification, the word "to" representing a numerical range means that numerical values appearing at the front and rear of the range are included as a lower limit value and an upper limit value, respectively, unless otherwise specified.

### <First Embodiment>

### [Packaging Bag]

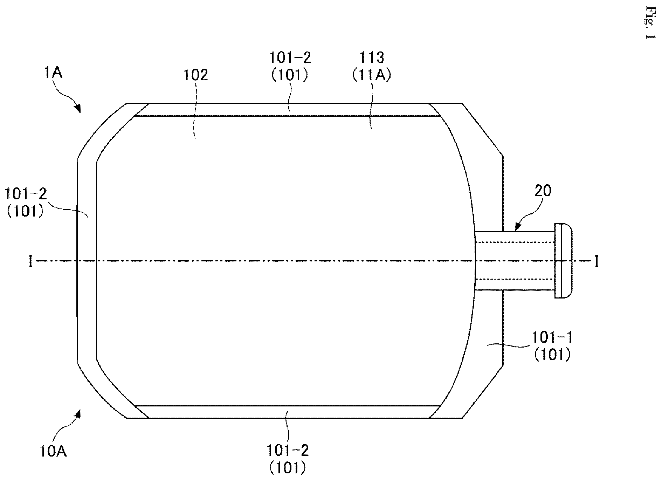

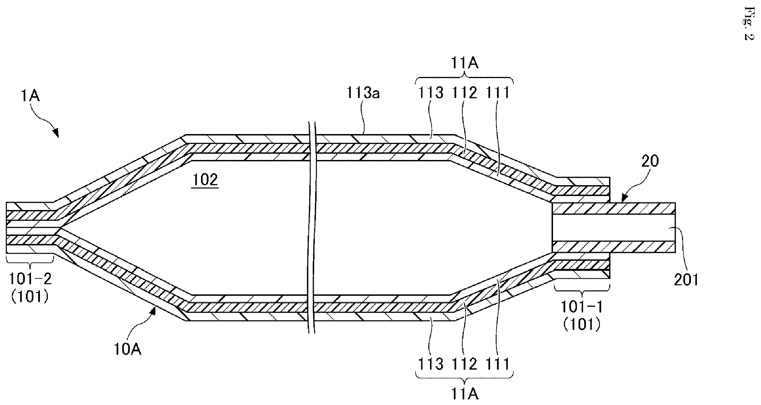

A packaging bag according to a first embodiment of the present invention will be described. Fig. 1 is a plan view of the packaging bag according to the present embodiment, and Fig. 2 is a cross-sectional view taken along line I-I in Fig. 1. As illustrated in Fig. 1, the packaging bag 1A according to the present embodiment includes a bag body 10A, and may include a spout 20 which is bonded to the bag body 10A. The packaging bag 1A stores contents inside the bag body 10A. Note that, in the present embodiment, the packaging bag 1A includes the bag body 10A and the spout 20, but may include other members.

Examples of contents include pharmaceutical products (drugs), cells, tissue, organs, biological material, blood, body fluids, enzymes, antibodies, beauty products, nutrients, health agents, cosmetic products, and food products. Among these examples, pharmaceutical products are preferable. As pharmaceutical products, for example, biopharmaceuticals are preferable. Preferable examples of biopharmaceuticals include protein preparations.

The form of the contents is not particularly limited, and may be, for example, a solid, a liquid, a gas, a powder, particles, a mixture, a composition, a dispersion, or the like. In cases where the contents are a liquid, the liquid may be an aqueous solution containing a drug.

When the contents are stored in the bag body 10A, the bag body 10A may be filled with an inert gas such as nitrogen or with a liquid.

Although the packaging bag 1A is a pouch, the form of the packaging bag 1A is not particularly limited, and may be, for example, a three-way bag, a four-way bag, a gassho bag, a gusset bag, a self-standing bag, an inner bag for bag-in-box, a drum can inner bag, or the like.

As illustrated in Fig. 2, the bag body 10A is formed of a pair of laminates 11A and is formed into a bag shape by layering the pair of laminates 11A to face each other and sticking the outer peripheral edge portions of both laminates together.

The bag body 10A includes a bonded part 101 obtained by layering the pair of laminates 11A to face each other and fusing the outer peripheral edges of both laminates together, and a storage chamber 102 defined by the pair of laminates 11A and the bonded part 101.

The bonded part 101 is provided in a closed ring shape at a peripheral edge portion of the bag body 10A. The bonded part 101 has a first bonded part 101-1 where the laminates 11A and the spout 20 are bonded, and a second bonded part 101-2 where the laminates 11A are bonded. In a plan view of the bag body 10A, the first bonded part 101-1 and the second bonded part 101-2 are continuously formed.

The storage chamber 102 is a space to be filled with contents. Note that, in the drawings, specific states, shapes, and the like of the contents are not illustrated. Before filling with the contents, the bag body 10A may have a filling port for filling the storage chamber 102 with the contents, in a portion, or the like, of the bonded part 101.

### (Laminate)

As shown in Fig. 2, the laminates 11A each include a sealant layer 111, an oxygen barrier layer 112, and a water vapor barrier layer 113 which are laminated in this order. The bag body 10A is formed by making the sealant layers 111 of the pair of laminates 11A face each other and sticking the outer peripheral edge portions of the sealant layers 111 together.

### ((Sealant Layer))

The sealant layers 111 are used when the laminates 11A are stuck together by heat sealing or the like to form a bag shape. The sealant layer 111 is a layer that faces the storage chamber 102 and that is in contact with the contents.

The sealant layer 111 preferably contains a cyclic olefin-based resin from the viewpoint of being non-adsorptive.

Examples of cyclic olefin-based resins include cyclic olefin polymers (COP) and cyclic olefin copolymers (COC). The resin component constituting the sealant layer 111 may be one kind or two or more kinds of cyclic olefin-based resins, or may be a mixture of a cyclic olefin-based resin and another resin or elastomer or the like.

Examples of COPs include a homopolymer of a cyclic olefin, a copolymer of two or more kinds of cyclic olefins, or a hydrogenated product thereof. The COP is preferably a non-crystalline polymer, more preferably a ring-opening polymer of a cyclic olefin resulting from metathesis or the like, or a hydrogenated product thereof. The COP has a high ratio containing an alicyclic structure as compared with a cyclic olefin copolymer or the like, and has excellent non-adsorptive properties with respect to the contents stored in the storage chamber 102.

Examples of COCs include copolymers of one or two or more cyclic olefins and one or two or more acyclic olefins, or hydrogenated products thereof. The cyclic olefin copolymer is preferably a non-crystalline polymer, and more preferably a copolymer of cyclic olefin and ethylene, or a hydrogenated product thereof.

The cyclic olefin used as a constituent monomer of the cyclic olefin-based resin is an unsaturated hydrocarbon (olefin) having at least one ring structure. Examples thereof include a vinylcycloalkane having a cycloalkane of 3 to 20 carbon atoms and derivatives thereof, a monocycloalkene of 3 to 20 carbon atoms and derivatives thereof, and a cyclic olefin having a norbornene skeleton (norbornene-based monomer).

Examples of norbornene-based monomers include bicyclo[2.2.1]-2-heptene (norbornene) and derivatives thereof. Examples of derivatives include compounds having a substituent such as an alkyl group, compounds having two or more unsaturated bonds such as norbornadiene, and compounds having three or more ring structures, two of which constitute a norbornene skeleton. Examples of norbornene-based monomers having three or more ring structures include tricyclo[5.2.1.0^{2,6}]decene (dihydrodicyclopentadiene), compounds in which one or more molecules of cyclopentadiene are added to norbornene or dihydrodicyclopentadiene by Diels-Alder reaction (for example, tetracyclododecene, pentacyclopentadecene, hexacycloheptadecene, and the like), hydrogenated products thereof, isomers having different double bond positions, alkyl substituents, and the like.

Examples of acyclic olefins used as a constituent monomer of COC include α-olefins such as ethylene, propylene, 1-butene, 1-pentene, 1-hexene, 1-heptene, and 1-octene, and alkenes such as 3-decene and 3-dodecene.

The thickness of the sealant layer 111 is preferably 10 µm to 100 µm, more preferably 20 µm to 60 µm, and still more preferably 30 µm to 50 µm. When the thickness of the sealant layer 111 is 10 µm to 100 µm, the sealant layers 111 of the laminate 11A can be stuck together by heat sealing or the like to form the laminates 11A into a bag shape. Note that the upper limit value and the lower limit value of the thickness of the sealant layer 111 may be arbitrarily combined.

In a case where the sealant layer 111 contains a cyclic olefin-based resin, the water vapor permeability (water vapor transmission rate) of the bag body 10A tends to decrease as the sealant layer 111 becomes thicker. Meanwhile, as the sealant layer 111 becomes thicker, the sealant layer 111 tends to be more easily cracked. In a case where the sealant layer 111 contains a cyclic olefin-based resin, if the thickness of the sealant layer 111 is 20 µm to 60 µm, the sealant layer 111 can suppress a reduction in strength while reducing the water vapor permeability.

Note that, in the present specification, the thickness of the sealant layer 111 refers to the length in a direction perpendicular to the principal surface of the sealant layer 111. The thickness of the sealant layer 111 may be, for example, a thickness measured at an arbitrary position in a cross-section of the sealant layer 111, or may be an average value of such measured values measured at several positions. Hereinafter, the definition of the thickness is similarly defined for other members.

### ((Oxygen Barrier Layer))

The oxygen barrier layer 112 is provided between the water vapor barrier layer 113 and the sealant layer 111.

As a material for forming the oxygen barrier layer 112, an ethylene-vinyl alcohol copolymer (EVOH), vinylidene chloride, and the like, can be used. Such materials may be used singly or in a combination of two or more kinds thereof. Among such materials, the oxygen barrier layer 112 preferably contains an EVOH. Because the oxygen barrier layer 112 contains an EVOH, the bag body 10A has excellent mechanical strength and optical properties and can have low water vapor permeability.

The ethylene content of the EVOH is not particularly limited but, from the viewpoint that the oxygen barrier layer 112 exhibits oxygen barrier properties, is preferably 1% to 50%, preferably 30% to 46%, and more preferably 32% to 44%.

When the pair of laminates 11A is heat-sealed by the sealant layer 111, it is necessary to heat the sealant layer 111 until the resin contained in the sealant layer 111 melts. At that time, in order to suppress deformation and deterioration of the laminate 11A, the heating temperature at the time of heat-sealing needs to be lower than the melting temperature of the resin contained in the oxygen barrier layer 112. Therefore, the type of resin contained in the sealant layer 111 is limited by the type of resin contained in the oxygen barrier layer 112. In the case of the laminate 11A according to the present embodiment, by using, as the fluorine-based resin, a resin having a higher glass transition temperature Tg than that of resins that have hitherto been applied to the water vapor barrier layer, options for materials for forming the sealant layer 111 can be broadened.

The oxygen permeability of the oxygen barrier layer 112 is preferably 15 cc/(m²·24hrs·atm) or less. When the oxygen barrier properties of the oxygen barrier layer 112 are 15 cc/(m²·24hrs·atm) or less, the laminate 11A can have sufficient oxygen barrier properties. Note that the lower limit value for the oxygen barrier properties of the oxygen barrier layer 112 is not particularly limited, and may be an arbitrary thickness as appropriate according to the use, and the like, of the packaging bag 1A.

The thickness of the oxygen barrier layer 112 may be 15 µm or more. When the thickness of the oxygen barrier layer 112 is 15 µm or more, the oxygen permeability of the laminate 11A can be suppressed to 15 cc/(m²·24hrs·atm) or less, and the laminate 11A can be formed into a bag shape. Note that the upper limit value for the thickness of the oxygen barrier layer 112 is not particularly limited, and may be an arbitrary thickness as appropriate according to the type of the oxygen barrier layer 112, the use of the packaging bag 1A, and the like.

The oxygen barrier layer 112 may be a single layer including one layer, or two or more layers may be laminated.

### ((Water Vapor Barrier Layer))

The water vapor barrier layer 113 is a layer that is exposed to the outside of the storage chamber 102 and contains a fluorine-based resin.

Examples of fluorine-based resins include polytetrafluoroethylene (PTFE), tetrafluoroethylene-perfluoroalkyl vinyl ether copolymer (PFA), tetrafluoroethylene-hexafluoropropylene copolymer (FEP), tetrafluoroethylene-hexafluoropropylene-perfluoroalkyl vinyl ether (EPA), tetrafluoroethylene-ethylene copolymer (ETFE), polyvinylidene fluoride (PVDF), polychlorotrifluoroethylene (PCTFE), chlorotrifluoroethylene-ethylene copolymer (ECTFE), and the like. Among these resins, polychlorotrifluoroethylene (PCTFE) is preferable. The above-mentioned resins may be used singly or in combination of two or more kinds thereof.

The water vapor barrier layer 113 may contain a material which is generally used as a material having water vapor barrier properties in addition to the fluorine-based resin. Other than fluorine-based resins, examples of materials having water vapor barrier properties that can be used include metal foils such as aluminum foils; a vapor-deposited layer on which an inorganic substance such as aluminum, silica, or alumina is vapor-deposited; a resin layer of a polyolefin-based resin, an ethylene-vinyl alcohol copolymer (EVOH), polyvinylidene chloride (PVDC), a fluorine-based resin, or the like. Such materials may be used singly or in a combination of two or more kinds thereof.

Examples of olefin-based resins include polyethylene-based resins and cyclic olefin-based polymers. Examples of polyethylene-based resins include polypropylene (PP), high density polyethylene (HDPE), and linear low density polyethylene (LLDPE).

The water vapor barrier layer 113 contains a fluorine-based resin, and preferably contains PCTFE among the fluorine-based resins. Because the water vapor barrier layer 113 contains a fluorine-based resin, the bag body 10A has excellent mechanical strength and optical properties, has a low water vapor transmission rate, and can suppress a reduction in barrier properties due to absorption of water vapor.

The water vapor barrier layer 113 is preferably formed of a resin having a melting point higher than the seal temperature of the sealant layer 111. A fluorine-based resin generally has a melting temperature higher than that of a resin used for the sealant layer 111, and as a result of being formed containing a fluorine-based resin, the water vapor barrier layer 113 can function as a base material when the pair of laminates 11A is heat-sealed by the sealant layer 111, and the selection of a material forming the sealant layer 111 can be expanded.

The thickness of the water vapor barrier layer 113 is preferably 10 µm to 100 µm, more preferably 15 µm to 80 µm, and still more preferably 20 µm to 60 µm. When the thickness of the water vapor barrier layer 113 is 10 µm to 100 µm, the laminate 11A is easily formed into a bag shape.

The water vapor barrier layer 113 may be a single layer including one layer, or two or more layers may be laminated.

### (Other Layers)

The laminate 11A may include other layers between any of the sealant layer 111, the oxygen barrier layer 112, and the water vapor barrier layer 113 or on the surface of any of these layers. The types of the other layers can be appropriately selected, and examples thereof include a reinforcing layer, a light shielding layer, a printing layer, a metal foil, synthetic paper, and the like.

Examples of reinforcing layers include reinforcing resin layers of biaxially stretched polyethylene terephthalate (O-PET), biaxially stretched nylon (O-Ny), biaxially stretched polypropylene (OPP), and the like.

The laminate 11A may have a printing layer or a coating layer on a face (surface) 113a of the water vapor barrier layer 113 opposite to the oxygen barrier layer 112.

The printing layer can impart discriminability and design to the packaging bag 1A by printing ink on the surface 113a of the water vapor barrier layer 113.

The coating layer serves to protect the water vapor barrier layer 113 or another layer such as a printing layer provided on the water vapor barrier layer 113. Examples of such a coating layer include a thin resin layer (resin film) and an ultraviolet curable resin.

As described above, the bonded part 101 is formed by layering the pair of laminates 11A to face each other, and is formed by fusing the resin contained in each sealant layer 111 of the pair of laminates 11A. The bonded part 101 has a laminated configuration in which layers are laminated in the order of "water vapor barrier layer 113/oxygen barrier layer 112/sealant layer 111/sealant layer 111/oxygen barrier layer 112/water vapor barrier layer 113" in moving from the surface side of one water vapor barrier layer 113 of the laminate 11A toward the surface side of the other water vapor barrier layer 113 of the laminate.

### [Spout]

As shown in Fig. 2, the spout 20 is sandwiched and bonded between the opposing sealant layers 111. The spout 20 preferably contains a cyclic olefin-based resin, and preferably contains a cyclic olefin-based resin at least in the portion in contact with the contents. Examples of the cyclic olefin-based resin forming the spout 20 include those similar to the cyclic olefin-based resin forming the sealant layer 111. The material forming the spout 20 and the material forming the sealant layer 111 may be the same or different, but the spout 20 and the sealant layer 111 are preferably formed of the same material. Note that the molded article may be a one-color molded article or a multicolor molded article such as a two-color molded article.

The spout 20 has a tubular shape and has a flow path 201 for taking out contents therein. The spout 20 has at least a portion which is housed in the storage chamber 102. The spout 20 preferably contains a cyclic olefin-based resin or a polyolefin-based resin as a forming material, and more preferably contains a cyclic olefin-based resin. When the spout 20 is formed of a cyclic olefin-based resin, the spout 20 can have excellent non-adsorptive properties with respect to the contents.

The polyolefin-based resin may be a homopolymer of one olefin or a copolymer of two or more olefins. Examples of olefins include acyclic olefins such as ethylene, propylene, 1-butene, 1-hexene, 1-octene, and α-olefin. Specific examples of polyolefins include polyethylene, polypropylene, and ethylene-α-olefin copolymers. These polyolefins may be copolymers containing a small amount of a non-olefinic vinyl monomer such as vinyl acetate, vinyl chloride, and vinyl alcohol. The origin of the olefin may be a petroleum-derived olefin, a plant-derived olefin, or a combination of both.

In a case where the polyolefin-based resin forming the spout 20 is polyethylene, linear low density polyethylene (LLDPE) is preferable as the polyethylene. When the spout 20 is formed of LLDPE, the laminate 11A forming the bag body 10A and the spout 20 are easily bonded, and the handleability and durability of the packaging bag 1A can be improved.

The first bonded part 101-1 is formed by fusing the resin contained in the sealant layer 111 of each laminate 11A of the pair of laminates 11A and the resin contained in the spout 20. In the first bonded part 101-1, the laminated configuration of the bonded portion between the laminate 11A and the spout 20 is in the order of "water vapor barrier layer 113/oxygen barrier layer 112/sealant layer 111/spout 20/sealant layer 111/oxygen barrier layer 112/water vapor barrier layer 113" from the surface side of one water vapor barrier layer 113 of the laminate 11A toward the surface side of the other water vapor barrier layer 113.

As shown in Fig. 2, the laminate 11A may have a portion bonded to the spout 20 at the first bonded part 101-1.

In addition to the spout 20, the packaging bag 1A may have attachments such as an inlet, a cock, a label, an opening knob, and a handle. In a case where the appendage is a resin molded article, the configuration may be similar to that of the spout 20 described above.

### [Method for Manufacturing Packaging Bag]

An example of a method for manufacturing the packaging bag 1A will be described. In the method for manufacturing the packaging bag 1A, the laminate 11A is formed by sequentially laminating a resin which is to be a raw material of the water vapor barrier layer 113, a resin which is to be a raw material of the oxygen barrier layer 112, and a resin which is to be a raw material of the sealant layer 111 (step of forming the laminate 11A).

The sealant layer 111, the oxygen barrier layer 112, and the water vapor barrier layer 113 may be laminated by means of a method such as a dry lamination method or an extrusion lamination method to form the laminate 11A.

Next, the laminate 11A and the spout 20 are bonded (bonding step).

First, the spout 20 is sandwiched between the laminates 11A in a state where the sealant layers 111 of the laminates 11A are facing each other.

Next, the laminate 11A and the spout 20 are bonded to form the first bonded part 101-1.

Next, the laminates 11A are bonded together to form the second bonded part 101-2.

As a result, the packaging bag 1A is manufactured.

As described above, the packaging bag 1A includes the bag body 10A including the bonded part 101 and the storage chamber 102, and the water vapor barrier layer 113 included in the laminate 11A constituting the bag body 10A includes a fluorine-based resin having low water vapor permeability as a forming material. As a result, the water vapor barrier layer 113 can sufficiently lower the water vapor permeability, and can suppress a reduction in the barrier properties against water vapor (the water vapor barrier properties). Therefore, it is possible to suppress absorption, by the oxygen barrier layer 112 located inside the storage chamber 102 of the water vapor barrier layer 113, of the water vapor which has passed through the water vapor barrier layer 113. Thus, the packaging bag 1A can maintain the barrier properties against oxygen (oxygen barrier properties) by maintaining the oxygen permeability low, and can maintain the water vapor barrier properties by keeping the water vapor transmission properties low.

The packaging bag 1A can include an EVOH in the oxygen barrier layer 112. As a result, because the oxygen barrier layer 112 can have a low oxygen permeability, the packaging bag 1A can reliably exhibit the oxygen barrier properties.

The packaging bag 1A can contain PCTFE as the fluorine-based resin contained in the water vapor barrier layer 113. Among fluorine-based resins, PCTFE in particular has a low water vapor permeability, suppresses moisture absorption, and can maintain water vapor barrier properties. Therefore, in the packaging bag 1A, if PCTFE is used as the fluorine-based resin included in the water vapor barrier layer 113, moisture absorption by the water vapor barrier layer 113 can be reliably suppressed, and thus deterioration of the water vapor barrier properties of the water vapor barrier layer 113 and the oxygen barrier properties of the oxygen barrier layer 112 can be more reliably suppressed. Therefore, the packaging bag 1A can more reliably maintain the oxygen barrier properties and the water vapor barrier properties.

In the packaging bag 1A, the thickness of the water vapor barrier layer 113 can be set to 10 µm to 100 µm. As a result, the water vapor barrier layer 113 is capable of lowering the water vapor permeability while imparting flexibility to the packaging bag 1A. Therefore, the packaging bag 1A exhibits water vapor barrier properties and can be easily formed into a bag-like shape.

In the packaging bag 1A, the oxygen barrier layer 112 can have a thickness of 15 µm or more. As a result, the oxygen barrier layer 112 can keep the oxygen permeability low while imparting flexibility to the packaging bag 1A. Therefore, the packaging bag 1A exhibits oxygen barrier properties and can be easily formed into a bag-like shape.

The packaging bag 1A includes the spout 20 and can be bonded in a state where the spout 20 is sandwiched between the opposing sealant layers 111 of the pair of opposing laminates 11A. As a result, because it is possible to keep water vapor and air from entering the storage chamber 102 from the outside from between the spout 20 and the sealant layer 111, the packaging bag 1A can maintain the water vapor barrier properties and the oxygen barrier properties. In addition, because the spout 20 can be formed of a cyclic olefin-based resin such as COP or COC similarly to the sealant layer 111, the packaging bag 1A can more reliably enhance the non-adsorptive properties with respect to the contents.

As described above, because the packaging bag 1A has characteristics such as the above-mentioned characteristics, the packaging bag 1A can be suitably used as an infusion bag that stores medicines (drugs), nutrients, food and drink, medical containers, medical devices, medical supplies, cosmetic products, and the like, and is subjected to sterilization treatment.

### <Second Embodiment>

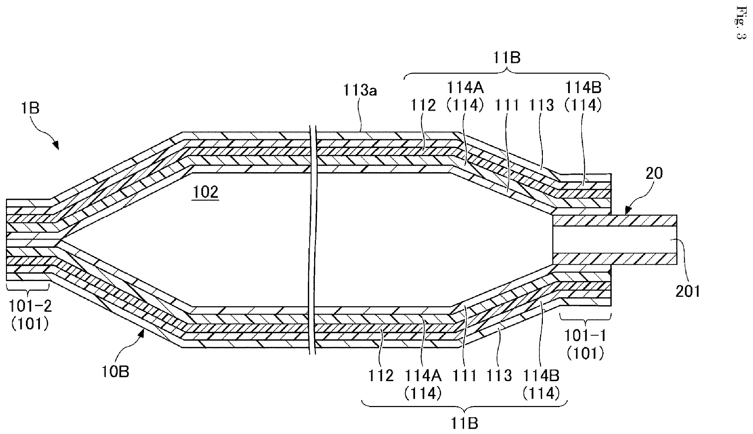

A packaging bag according to a second embodiment of the present invention will be described. Fig. 3 is a cross-sectional view of the packaging bag according to the present embodiment, which is a cross-sectional view taken along line I-I in Fig. 1. As illustrated in Fig. 3, a packaging bag 1B according to the present embodiment is obtained by changing a laminate 11A constituting a bag body 10A of the packaging bag 1A according to the first embodiment illustrated in Fig. 1 to a laminate 11B.

The laminate 11B has an adhesive layer (adhesive resin layer) 114 between each of the sealant layer 111, the oxygen barrier layer 112, and the water vapor barrier layer 113.

### [Adhesive Layer]

The adhesive layer 114 includes an adhesive layer 114A provided between the sealant layer 111 and the oxygen barrier layer 112, and an adhesive layer 114B provided between the oxygen barrier layer 112 and the water vapor barrier layer 113. The adhesive layer 114A and the adhesive layer 114B may be formed of the same type of material, or may be formed of different types of materials.

The adhesive layer 114 is preferably a first adhesive layer containing a polyethylene-based resin and a modified polyethylene-based resin or a second adhesive layer containing a polyethylene-based resin, an elastomer component, and a resin composition containing an epoxy group.

### (First Adhesive Layer)

Examples of the polyethylene-based resin contained in the first adhesive layer include linear low density polyethylene (LLDPE), low density polyethylene (LDPE), medium density polyethylene (MDPE), and high density polyethylene (HDPE), and low density polyethylene is preferable.

The modified polyethylene-based resin contained in the first adhesive layer is a polyethylene-based resin modified with an unsaturated carboxylic acid or a derivative thereof, and has an acid functional group such as a carboxy group or a carboxylic anhydride group in the polyethylene-based resin. The modified polyethylene-based resin contained in the first adhesive layer is preferably obtained by acid-modifying the polyethylene-based resin.

Examples of the acid modification method include graft modification, in which a polyethylene-based resin and an acid functional group-containing monomer are melt-kneaded in the presence of a radical polymerization initiator such as an organic peroxide or an aliphatic azo compound.

The polyethylene-based resin material before modification is not limited as long as it contains ethylene as a raw material monomer, and a known polyethylene-based resin is appropriately used. Specifically, in addition to the examples described above as polyethylene-based resins, examples include ethylene-α-olefin copolymers such as an ethylene-propylene copolymer, an ethylene-1-butene copolymer, an ethylene-4-methyl-1-pentene copolymer, an ethylene-1-hexene copolymer, and an ethylene-1-octene copolymer, and include ethylene-based copolymer resins such as an ethylene-vinyl acetate copolymer, an ethylene-(meth)acrylic acid copolymer, and an ethylene- (meth)acrylic acid ester copolymer.

The acid functional group-containing monomer is a compound having an ethylenic double bond and a carboxy group or a carboxylic acid anhydride group in the same molecule, and examples thereof include various unsaturated monocarboxylic acids, dicarboxylic acids, and acid anhydrides of dicarboxylic acids.

Examples of acid functional group-containing monomers having a carboxy group (carboxy group-containing monomers) include α, 6-unsaturated carboxylic acid monomers such as acrylic acid, methacrylic acid, maleic acid, nadic acid, fumaric acid, itaconic acid, citraconic acid, crotonic acid, isocrotonic acid, tetrahydrophthalic acid, and endo-bicyclo[2.2.1]-5-heptene-2,3-dicarboxylic acid (endic acid).

Examples of acid functional group-containing monomers having a carboxylic acid anhydride group (carboxylic acid anhydride group-containing monomers) include unsaturated dicarboxylic acid anhydride monomers such as maleic anhydride, nadic anhydride, itaconic anhydride, citraconic anhydride, and endic anhydride.

These acid functional group-containing monomers may be used singly or in combination of two or more kinds thereof in the components constituting the oxygen barrier layer 112.

Among such monomers, as the acid functional group-containing monomer, an acid functional group-containing monomer having an acid anhydride group is preferable, a carboxylic acid anhydride group-containing monomer is more preferable, and maleic anhydride is particularly preferable.

In a case where a portion of the acid functional group-containing monomer used for the acid modification is unreacted, in order to prevent a reduction in adhesive strength due to the unreacted acid functional group-containing monomer, it is preferable to use a monomer obtained by removing the unreacted acid functional group-containing monomer in advance.

The modified polyethylene-based resin contained in the first adhesive layer is preferably maleic anhydride-modified polyethylene.

In the first adhesive layer, when the total of the polyethylene-based resin and the modified polyethylene-based resin is 100% by mass, the lower limit value of the ratio of the polyethylene-based resin to the total amount of the polyethylene-based resin and the modified polyethylene-based resin is preferably 10% or more, more preferably 20% or more. The upper limit of the ratio of the polyethylene-based resin to the total amount of the polyethylene-based resin and the modified polyethylene-based resin is preferably 70% or less, more preferably 60% or less. For example, the mixing ratio of the polyethylene-based resin and the modified polyethylene-based resin may be polyethylene-based resin: modified polyethylene-based resin = 20:80 to 60:40.

By using a mixed material of a polyethylene-based resin and a modified polyethylene-based resin for the oxygen barrier layer 112, adhesion between the sealant layer 111, the oxygen barrier layer 112, and the water vapor barrier layer 113 is improved. Therefore, it is possible to suppress the occurrence of delamination in the oxygen barrier layer 112.

### (Second Adhesive Layer)

The second adhesive layer contains a resin composition containing a polyethylene-based resin, an elastomer component, and a component having an epoxy group.

The polyethylene-based resin contained in the second adhesive layer is the same as the polyethylene-based resin contained in the mixture of the polyethylene-based resin and the modified polyethylene-based resin. The polyethylene-based resin contained in the above-mentioned resin composition may be either biomass polyethylene, petroleum-derived polyethylene, or a mixture of both.

In the polyethylene-based resin contained in the second adhesive layer, the polyethylene-based resin in the above-mentioned resin composition is preferably polyethylene polymerized by a metallocene-based catalyst. Among such resins, ethylene-α-olefin copolymers such as C4-LLDPE, C6-LLDPE, and C8-LLDPE polymerized by a metallocene-based catalyst, long chain branched polyethylene, and the like are preferable examples.

The polyethylene-based resin polymerized by a metallocene-based catalyst tends to have a narrow molecular weight distribution. For this reason, it is considered that there are few low molecular weight components that can be adhesion inhibitory factors, and high adhesiveness is obtained in the case of usage as an adhesive.

The density of the polyethylene-based resin in the above-mentioned resin composition is preferably 0.890 g/cm³ or more and 0.940 g/cm³ or less, and more preferably 0.910 g/cm³ or more and 0.930 g/cm³ or less.

The content of the polyethylene-based resin in the above-mentioned resin composition is 55 parts by mass to 90 parts by mass, and preferably 60 parts by mass to 80 parts by mass. When the content of the polyethylene-based resin is 90 parts by mass or less, tackiness to the elastomer components described below is exhibited, and thus adhesiveness is enhanced.

Examples of the elastomer component contained in the second adhesive layer include a styrene elastomer, an acrylic elastomer, a urethane elastomer, and an ester elastomer. However, elastomer components exclude the components having an epoxy group described below.

Among such elastomers, styrene elastomers are preferable, and examples thereof include a block copolymer having a hard segment made of polystyrene or the like and a soft segment made of polyethylene, polybutadiene, polyisoprene or the like. Examples of styrene-based polymers that can be used as the styrene-based elastomer include aromatic olefin-aliphatic olefin copolymers such as a styrene-butadiene copolymer, a styrene-isoprene copolymer, and a styrene-ethylene copolymer.

The styrene elastomer is preferably a styrene-ethylene-butylene-styrene copolymer (SEBS) obtained by completely ring-opening an unsaturated bond in a molecule by hydrogenation of the styrene-butylene-styrene copolymer (SBS).

The styrene content is preferably 8% by mass to 24% by mass, and more preferably 10% by mass to 20% by mass. When the styrene content is 20% by mass or less, curing of the resin can be suppressed, enabling a reduction in the adhesiveness to be curbed.

Specific examples of the elastomer component contained in the second adhesive layer include DYNARON manufactured by JSR Corporation, TUFTEC H series manufactured by Asahi Kasei Corporation, and Kraton G Polymer manufactured by Kraton Corporation.

In the second adhesive layer, the content of the elastomer component is 10 parts by mass to 45 parts by mass, and preferably 20 parts by mass to 40 parts by mass. When the content of the elastomer component is 45 parts by mass or less, a reduction in tensile strength when the second adhesive layer is formed can be suppressed, and thus a reduction in adhesive strength can be prevented.

The total amount of the above-mentioned polyethylene-based resin and the above-mentioned elastomer component is 100 parts by mass.

The component having an epoxy group contained in the second adhesive layer is preferably a component having an epoxy group and a vinyl group. The component having an epoxy group and a vinyl group is preferably a component having a 1,2-vinyl structure, and epoxidized polybutadiene obtained by partially epoxidizing butadiene is preferable. It is particularly preferable that 1,2-polybutadiene is partially epoxidized.

Specific examples of the component having an epoxy group include liquid polybutadiene JP-100 and JP-200 available from Nippon Soda Co., Ltd., ADK CIZER BF-1000 available from ADEKA Corporation, and the like.

The number-average molecular weight of the component having an epoxy group is preferably 500 to 4000. When the number-average molecular weight of the component having an epoxy group is 4000 or less, it is possible to suppress a reduction in tackiness due to a solid state at ambient temperature, and it is possible to prevent a reduction in adhesiveness.

In the present embodiment, the number-average molecular weight is a value in terms of polystyrene measured by gel permeation chromatography (GPC).

In the second adhesive layer, the content of the component having an epoxy group based on 100 parts by mass of the total amount of the above-mentioned polyethylene-based resin and the above-mentioned elastomer component is 0.1 parts by mass to 1.5 parts by mass, preferably 0.5 parts by mass to 1.0 parts by mass. When the content of the component having an epoxy group is 1.5 parts by mass or less, a low molecular weight component in the resin composition that causes adhesion inhibition can be reduced.

In the second adhesive layer, the above-mentioned elastomer component and the component having an epoxy group have a common repeating unit and are compatible with each other. The elastomer component and the component having an epoxy group are preferably a combination of styrene elastomers with each other, or a combination of acrylic elastomers with each other.

In the resin composition of the second adhesive layer, the polyethylene-based resin, the elastomer component, and the component having an epoxy group may be mixed at a specific mixing ratio. In the resin composition of the second adhesive layer, the epoxy group in the component having an epoxy group is compatible with the fluorine component of the fluorine-based resin, and has excellent adhesiveness to the fluorine-based resin. When an epoxy group is contained, adhesion to a metal material is also possible.

In the second adhesive layer, a polyethylene-based resin, an elastomer component, and a component having an epoxy group are mixed at a specific blending ratio, thereby forming a so-called sea-island structure in which the polyethylene-based resin corresponds to "sea" and the elastomer component corresponds to "island". Furthermore, when the component having an epoxy group is compatible with the elastomer component, the component having an epoxy group can be uniformly dispersed in the resin composition. As a result, it is presumed that the epoxy group is protected by the polyethylene-based resin and the elastomer component, and the ring-opening of the epoxy group due to moisture can be suppressed.

By using a mixed material of a polyethylene-based resin, an elastomer component, and a component having an epoxy group for the oxygen barrier layer 112, adhesion between layers of the sealant layer 111, the oxygen barrier layer 112, and the water vapor barrier layer 113 is improved. For this reason, it is possible to make it difficult to cause delamination of the laminate 11A.

As described above, because the laminate 11B of the bag body 10A of the packaging bag 1B includes an adhesive layer 114, the packaging bag 1B can maintain the oxygen barrier properties and the water vapor barrier properties while suppressing the occurrence of delamination between the sealant layer 111, the oxygen barrier layer 112, and the water vapor barrier layer 113.

The embodiments have been described as described above, but the above-mentioned embodiments are presented as examples, and the present invention is not limited by the above-mentioned embodiments. The above-mentioned embodiments can be implemented in various other forms, and various combinations, omissions, substitutions, changes, and the like can be made without departing from the gist of the invention. These embodiments and modifications thereof are included in the scope and gist of the invention, and are included in the invention described in the claims and the equivalent scope thereof.

### EXAMPLES

Hereinafter, the present embodiment will be described by way of examples, but the present embodiment is not limited to these examples.

### <Preparation of Laminate (Laminated Film)>

### [Example 1]

For the formation of the sealant layer, the oxygen barrier layer, the water vapor barrier layer and the adhesive layer (AD) that constitute the laminate (laminated film), a cycloolefin polymer (COP), an ethylene-vinyl alcohol copolymer ("EVOH1"; ethylene content: 32%), a polychlorotrifluoroethylene resin (PCTFE), and a maleic anhydride-modified polyethylene adhesive resin were used. Using a T-die type multilayer film-forming machine, COP, AD, EVOH1, AD and PCTFE were extruded by means of a co-extrusion method to prepare a laminated film in which a sealant layer, an adhesive layer, an oxygen barrier layer, an adhesive layer and a water vapor barrier layer were laminated in this order to have the thicknesses shown in Table 1.

### [Example 2]

A laminated film was prepared in the same manner as in Example 1 except that, instead of the oxygen barrier layer being EVOH1, an EVOH having an ethylene content different from that of EVOH1 ("EVOH2"; ethylene content: 44%) was used.

### [Example 3]

A laminated film was prepared in the same manner as in Example 2 except that the thickness of the sealant layer was changed to 16 µm.

### [Example 4]

A laminated film was prepared in the same manner as in Example 1 except that, instead of the oxygen barrier layer in being EVOH1, an aromatic polyamide resin (relative viscosity: 2.65, melt viscosity: 500 Pa ·sec, moisture: 300ppm) obtained by polymerizing meta-xylylenediamine and adipic acid was used.

### [Example 5]

A laminated film was prepared in the same manner as in Example 1 except that the resin for forming the water vapor barrier layer was changed to COP and the thickness of the water vapor barrier layer was changed to the thickness shown in Table 1.

### [Example 6]

A laminated film in which a sealant layer, an adhesive layer and an oxygen barrier layer were laminated in this order was prepared in the same manner as in Example 1 except that the laminated film was composed of three layers, namely, the sealant layer, the adhesive layer and the oxygen barrier layer.

### [Example 7]

A laminated film was prepared in the same manner as in Example 2 except that the resin for forming the water vapor barrier layer was changed to COP and the thickness of the water vapor barrier layer was changed to the thickness shown in Table 1.

### [Example 8]

A laminated film in which a sealant layer, an adhesive layer and an oxygen barrier layer were laminated in this order was prepared in the same manner as in Example 2 except that the laminated film was composed of three layers, namely, a sealant layer, an adhesive layer and an oxygen barrier layer.

In each example, the type and thickness of the material of each layer constituting the laminated film are shown in Table 1.

### <Evaluation>

The oxygen permeability and the water vapor permeability of the laminated film of each example were measured, and the oxygen barrier properties and the water vapor barrier properties were evaluated.

### [Oxygen Permeability]

In accordance with the electrolytic sensor method (Appendix A) of JIS K 7126-2:2006 "Plastic-film and sheet-gas permeability measurement test method - Part 2: Isocratic method (Mocon method)", oxygen gas was permeated through the obtained laminated film under the conditions of a temperature of 40°C and a relative humidity of 70% RH using an oxygen permeability measuring apparatus. The amount of oxygen gas (oxygen permeability) passing through the laminated film was measured by an electrolytic sensor method. The laminated film was disposed so that the sealant layer side was a chamber side into which an oxygen gas was introduced, and the oxygen gas was allowed to permeate from the sealant layer side of the laminated film to the water vapor barrier layer side. Because oxygen permeates through the laminated film, the oxygen permeability of the laminated film was regarded as the oxygen permeability of the package. The measurement results for the oxygen permeability of the laminated film of each example are shown in Table 1.

### [Water Vapor Permeability]

The water vapor permeability of the obtained laminated film was measured using an infrared sensor method (Mokon method). That is, in accordance with JIS K 7129-2008 B method, water vapor was transmitted through the obtained laminated film under the conditions of a temperature of 40°C and a relative humidity of 100% RH by using a water vapor transmission rate measurement apparatus. The amount of water vapor transmitted through the laminated film was detected by an infrared sensor, and the water vapor permeability was calculated. The laminated film was disposed such that the water vapor barrier layer side was a chamber side into which water vapor was introduced, and the water vapor was allowed to permeate from the water vapor barrier layer side of the laminated film to the sealant layer side. Because water vapor permeates through the laminated film, the water vapor permeability of the laminated film was regarded as the water vapor permeability of the package. The measurement results of the water vapor permeability of the laminated film of each example are shown in Table 1.

**[Table 1]**

| | Laminated film | | | |
|---|---|---|---|---|
| | Layer configuration (The parentheses indicate thickness [µm]) | Total thickness [µm] | Oxygen Permeability (40°C, 70%RH) [cc/(m²·24 hrs·atm)] | Water Vapor Permeability (40°C, 100%RH) [g/(m²·day)] |
| Example 1 | COP[30]/AD[20]/EVOH1[25]/AD[20]/PCTFE[25] | 120 | 2.9 | 0.20 |
| Example 2 | COP[30]/AD[20]/EVOH2[25]/AD[20]/PCTFE[25] | 120 | 10.1 | 0.18 |
| Example 3 | COP[16]/AD[20]/EVOH2[25]/AD[20]/PCTFE[25] | 106 | 10.7 | 0.25 |
| Example 4 | COP[30]/AD[20]/MX-Ny[25]/AD[20]/PCTFE[25] | 120 | 10.2 | 0.20 |
| Example 5 | COP[30]/AD[20]/EVOH1[25]/AD[20]/COP[30] | 125 | 3.8 | 0.90 |
| Example 6 | COP[30]/AD[20]/EVOH1[25] | 75 | 4.5 | 3.00 |
| Example 7 | COP[30]/AD[20]/EVOH2[25]/AD[20]/COP[30] | 125 | 11.6 | 1.20 |
| Example 8 | COP[30]/AD[20]/EVOH2[25] | 75 | 11.4 | 2.26 |

As shown in Table 1, the laminated film of Example 1 had a lower oxygen permeability and a lower water vapor permeability than the laminated films of Examples 5 and 6, and had excellent oxygen barrier properties and water vapor barrier properties. This is considered to be because, in the laminated films of Examples 5 and 6, the water vapor barrier layer is more hygroscopic and less moisture-proof than the laminated film in Example 1, and therefore the oxygen barrier layer absorbs water vapor that has passed through the water vapor barrier layer, and thus the oxygen barrier performance deteriorates.

The laminated films of Examples 2 to 4 had lower oxygen permeability and a lower water vapor permeability than the laminated films of Examples 7 and 8, and thus had excellent oxygen barrier properties and water vapor barrier properties. This is considered to be because, in the laminated films of Examples 7 and 8, the water vapor barrier layer is more hygroscopic and less moisture-proof than the laminated film in Examples 2 to 4, and therefore the oxygen barrier layer absorbs water vapor that has passed through the water vapor barrier layer, and thus the oxygen barrier performance deteriorates.

Therefore, in the package, it can be said that if PCTFE is used for the water vapor barrier layer constituting the laminated film, deterioration of the water vapor barrier layer and the oxygen barrier layer is suppressed, and thus excellent water vapor barrier properties and oxygen barrier properties can be exhibited.

Note that aspects according to the embodiment of the present invention are, for example, as follows.
<1> A packaging bag, comprising:
   a bag body provided with: a bonded part that is obtained by layering laminates, each of which includes a sealant layer, an oxygen barrier layer, and a water vapor barrier layer in that order, such that the sealant layer sides thereof face each other, and fusing the outer peripheral edges of both laminates together; and a storage chamber that is defined by the laminates and the bonded part, and that can be filled with contents,
   wherein the water vapor barrier layer contains a fluorine-based resin.
<2> The packaging bag according to <1>, wherein the oxygen barrier layer contains an ethylene-vinyl alcohol copolymer.
<3> The packaging bag according to <1> or <2>, wherein the fluorine-based resin contains polychlorotrifluoroethylene.
<4> The packaging bag according to any one of <1> to <3>, wherein the water vapor barrier layer has a thickness of 10 µm to 100 µm.
<5> The packaging bag according to any one of <1> to <4>, wherein the oxygen barrier layer has a thickness of 15 µm or more.
<6> The packaging bag according to any one of <1> to <5>, further comprising:
   a spout bonded to the bag body,
   wherein the spout is sandwiched and bonded between the opposing sealant layers.
<7> The packaging bag according to any one of <1> to <6>, wherein the contents are a medicine.
<8> The packaging bag according to any one of <1> to <7>, wherein the packaging bag is an infusion bag.

This application claims priority based on Japanese Patent Application No. 2023-042338 filed with the Japan Patent Office on March 16, 2023, the entire contents of which are incorporated herein by reference.

### REFERENCE SIGNS LIST

1A, 1B packaging bag
10A, 10B bag body
101 bonded part
101-1 first bonded part
101-2 second bonded part
102 storage chamber
11A, 11B laminate
111 sealant layer
112 oxygen barrier layer
113 water vapor barrier layer
114 adhesive layer
20 spout

## Claims

1. A packaging bag, comprising:
a bag body provided with: a bonded part that is obtained by layering laminates, each of which includes a sealant layer, an oxygen barrier layer, and a water vapor barrier layer in that order, such that the sealant layer sides thereof face each other, and fusing the outer peripheral edges of both laminates together; and a storage chamber that is defined by the laminates and the bonded part, and that can be filled with contents,
wherein the water vapor barrier layer contains a fluorine-based resin.

2. The packaging bag according to claim 1, wherein the oxygen barrier layer contains an ethylene-vinyl alcohol copolymer.

3. The packaging bag according to claim 1, wherein the fluorine-based resin contains polychlorotrifluoroethylene.

4. The packaging bag according to claim 1, wherein the water vapor barrier layer has a thickness of 10 µm to 100 µm.

5. The packaging bag according to claim 1, wherein the oxygen barrier layer has a thickness of 15 µm or more.

6. The packaging bag according to claim 1, further comprising:
a spout bonded to the bag body,
wherein the spout is sandwiched and bonded between the opposing sealant layers.

7. The packaging bag according to claim 1, wherein the contents are a medicine.

8. The packaging bag according to claim 1, wherein the packaging bag is an infusion bag.
